Europäisches Patentamt

European Patent Office

Office européen des brevets

(19)

(11) **EP 0 723 894 A2**

(12) **EUROPÄISCHE PATENTANMELDUNG**

(43) Veröffentlichungstag:
31.07.1996  Patentblatt 1996/31

(51) Int. Cl.$^6$: **B60R 21/32**

(21) Anmeldenummer: 96103812.2

(22) Anmeldetag: 23.12.1993

(84) Benannte Vertragsstaaten:
**DE FR GB**

(30) Priorität: 23.12.1992 DE 92121842
23.09.1993 DE 93115391

(62) Anmeldenummer der früheren Anmeldung nach Art.
76 EPÜ: **94904180.0**

(71) Anmelder: **SIEMENS AKTIENGESELLSCHAFT**
**80333 München (DE)**

(72) Erfinder:
- **Leirich, Oskar**
  **93073 Neutraubling (DE)**
- **Bischoff, Michael**
  **63791 Karlstein (DE)**
- **Guggenberger, Johann**
  **93098 Mintraching (DE)**

Bemerkungen:
Diese Anmeldung ist am 11 - 03 - 1996 als
Teilanmeldung zu der unter INID-Kode 62
erwähnten Anmeldung eingereicht worden.

(54) **Verfahren zur Steuerung der Steuereinheit eines Fahrzeuginsassenschutzsystems**

(57)    In einer Steuereinheit für ein Insassenschutz-system werden aus Sensorsignalen, die von minde-stens einem einen Unfall erkennenden Sensor (S) geliefert werden, mindestens zwei ISTwerte (I) mit ver-schiedenen physikalischen Einheiten abgeleitet. Das Insassenschutzsystem wird ausgelöst, wenn die IST-werte (I) innerhalb bestimmter Auslösewertebereiche (W, W1, W2) liegen.

FIG 2

EP 0 723 894 A2

## Beschreibung

Die Erfindung betrifft ein Verfahren für eine Steuereinheit, die bei einem genügend starkem Unfall ein Schutzsystem für Insassen eines Fahrzeuges mittels eines Algorithmus auslöst, also z.B. ein Airbagsystem. Es kann sich aber auch z.B. um Systeme mit Gurtstrammern und/oder Überrollbügeln handeln.

In den Schriften WO 90/11207, US 3,762,495, US 4,994,972, US 5,040,118 und EP-A1-0 292 669 handelt es sich jeweils um Verfahren für eine Steuereinheit, die bei einem genügend starken Crash ein Schutzsystem für Insassen eines Fahrzeuges auslöst, wobei die Steuereinheit eine Recheneinheit enthält, welche gemäß einem Algorithmus, der aus Teilalgorithmen zusammengesetzt ist und der Ausgangssignale eines oder mehrerer Sensoren verarbeitet, ein Steuersignal zum Auslösen des Schutzsystemes erzeugen kann. Beim Crash gestatten die Sensoren der Recheneinheit, endliche Beträge aufweisende, ISTwerte als von den Sensorsignalen ermittelte Werte mit verschiedenen physikalischen Einheiten zu ermitteln. Der Algorithmus wertet gleichzeitig mehrere, auf die Teilalgorithmen verteilte ISTwerte aus, die ihrerseits das Schutzsystem nur dann auslösen, wenn sie innerhalb von Auslösewertebereichen liegen, die ihrerseits durch diesen ISTwerten unmittelbar zugeordnete Auslöseschwellwerte definiert sind, so daß auch diese unmittelbar zugeordneten Auslöseschwellwerte die verschiedenen physikalischen Einheiten besitzen.

Bei diesen, durch die genannten fünf weiteren Schriften bekannten Verfahren sind also mehrere ISTwerte mit unterschiedlichen physikalischen Dimensionen mehreren Auslöseschwellwerten und mehreren Teilalgorithmen zugeordnet. Die verschiedenen ISTwerte können auch durch mehrere spezielle Sensoren direkt für sich gemessen werden. Insbesondere aus Figuren dieser bekannten Schriften geht aber hervor, daß dort jeweils einer oder mehrere Algorithmen benutzt werden, die aus Teilalgorithmen zusammengesetzt sind, welche für sich ISTwerte mit zugeordneten starren Auslöseschwellwerten vergleichen, wobei die Vergleichsergebnisse JA/NEIN-Ergebnisse sind, die anschließend noch nach Bool'schen Regeln verknüpft werden.

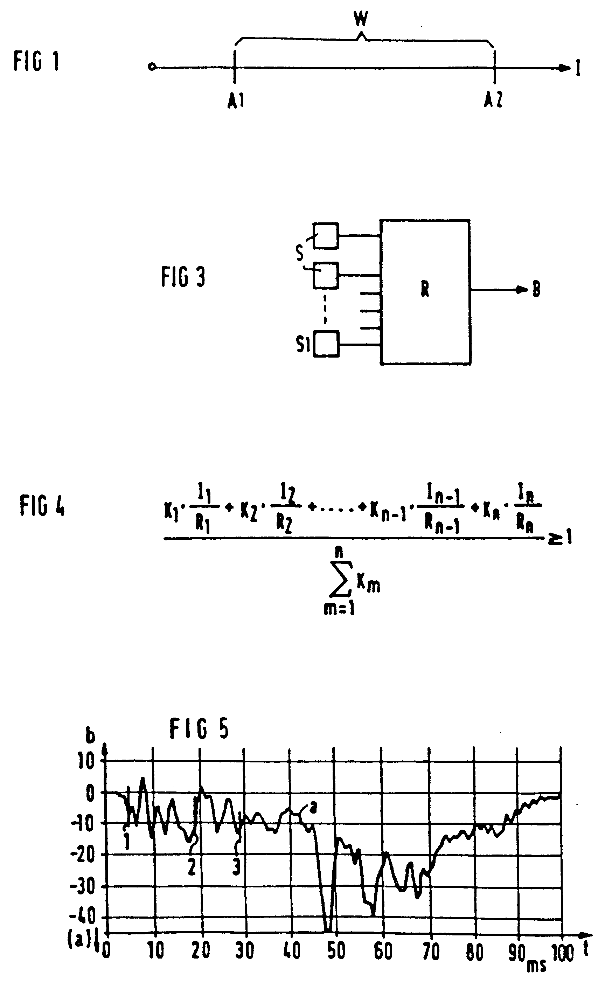

Das Grundkonzept auch dieser Algorithmen kann in etwa so beschrieben werden, vgl. die Figur 1 des vorliegenden Schutzrechtes: Alle Teilalgorithmen vergleichen jeweils einen einzelnen ISTwert Ix der unterschiedlichen ISTwerte I1 .... Iz jeweils mit einem oder mehreren, ihnen zugeordneten Auslöseschwellwerten Ax. Sobald z.B. der den ISTwert I1 enthaltende Teilalgorithmus I1/A1 für sich größer als EINS und/oder I1/A2 kleiner als EINS sind, dann erzeugen sie jeweils z.B. eine logische EINS als Ergebnis, andernfalls eine logische NULL. Diese EINS und NULL werden gemäß Bool'schen Regeln verknüpft, also z.B. über UND-Glieder, wonach z.B. feststeht, ob der betreffende ISTwert I1 innerhalb oder außerhalb des Auslösewertebereiches W liegt. Ausgelöst wird aber z.B. nur innerhalb des Bereiches W. Erst sobald eine bestimmte, mit Bool'scher Logik definierte Kombination der NULL/EINS-Ergebnisse der Teilalgorithmen besteht, also erst sobald alle verschiedenen berücksichtigten ISTwerte Ix innerhalb der ihnen mit starren Auslöseschwellwerten Ax zugeordneten Auslösewertebereiche W liegen, erst dann liefern diese Algorithmen jeweils ein endgültiges Ergebnis zur Steuerung des Schutzsystemes. Wenn demnach auch nur ein einziger dieser ISTwerte I1 auch nur knapp seinen Auslöseschwellwert A1 noch nicht erreicht, wird das Schutzsystem auch dann noch nicht ausgelöst, falls die übrigen ISTwerte I2 ... Iz schon tief innerhalb ihrer Auslösewertebereiche W2 ... Wz liegen und damit für sich schon längst die Voraussetzung für die Auslösung erfüllen.

Bei vielen bekannten Algorithmen - zumindest bei Teilalgorithmen davon - , wird bereits zwischen verschiedenen Arten von Unfällen differenziert, vor allem hinsichtlich der Aufprallrichtung. Z.B. gilt je nach Aufprallrichtung ein anderer Teilalgorithmus, vgl. damit die WO 90/11207. In dort beschriebenen Beispielen werden Sensorsignale/ISTwerte durch Teilalgorithmen mit zugeordneten Auslöseschwellwerten verglichen, was JA/NEIN-Ergebnisse bzw. EINS/NULL-Ergebnisse ergibt. Durch eine Bool'sche Verknüpfung wird schließlich entschieden, welcher Teilalgorithmus wirksam sein soll, indem nur derjenige ihm zugeordnete obere oder untere Auslöseschwellwert sowie nur derjenige, diesem Auslöseschwellwert unmittelbar zugeordnete ISTwert, welcher der betreffenden Aufprallrichtung zugeordnet ist, endgültig die Steuerung der Auslösung beeinflussen.

Z.B. in der EP-A1-0 292 669, wird zwar hinsichtlich der unterschiedlichen Verläufe der ISTwerte innerhalb derselben Aufprallrichtung differenziert. Dort wird eine Höchstgeschwindigkeitsgrenze A2 festgelegt, oberhalb der die Auslösung blockiert, also unterlassen wird, vgl. die Figur 1 des vorliegenden Schutzrechtes, sowie eine Mindestgeschwindigkeitsgrenze A1, unterhalb der die Auslösung ebenfalls blockiert, also unterlassen wird. Innerhalb derselben Aufprallrichtung wird aber der betreffende ISTwert nur mit der in sich starren Obergrenze A2 - z.B. Höchstgeschwindigkeit A2 - und/oder mit der in sich starren Mindestgrenze A1 - z.B. Mindestgeschwindigkeit A1 - verglichen. Die ISTwerte sind dort also starren, konstanten Auslöseschwellwerten A1, A2 zugeordnet.

Dies stellt aber aus der Sicht der Erfindung einen nicht mehr akzeptierbaren Nachteil dar, weil die Auslösung zu sehr verzögert und oft sogar fälschlicherweise ganz verhindert wird. Dann kann nämlich der optimale Auslösezeitpunkt schon längst vorbei sein, sobald schließlich der ISTwert I1 als letzter seinen Auslöseschwellwert A1 erreicht.

Die Aufgabe der Erfindung, mit wenig Hardwareaufwand den Auslöseschwellwert individuell dem betreffenden Unfallgeschehen jeweils sofort und besonders gut dosiert anzupassen, wird durch das im Patentanspruch 1 definierte Verfahren gelöst.

Bei der Erfindung fluktuieren die Auslöseschwellwerte i.allg. besonders rasch abhängig von ISTwerten.

Typisch für die Erfindung ist, daß ihre momentan gültigen Auslöseschwellwerte - zumindest innerhalb bestimmter Crashverlaufphasen - ständig rasch, i.allg. um kleine Beträge, nach oben und unten fluktuieren können. Die Erfindung setzt also zeitlich variable Auslöseschwellwerte fest, um - sogar für ein und dieselbe Aufprallrichtung - zwischen unterschiedlichen Aufprallsituationen besonders feinfühlig angepaßt differenzieren zu können. Der Auslöseschwellwert ist z.B. abhängig vom bisherigen Verlauf der gemessenen Verzögerungen, d.h. von den ISTwerten der Verzögerungen. Die momentan gültigen Auslöseschwellwerte fluktuieren sogar dann ständig nach oben und unten, falls während des betreffenden Crashverlaufes NUR ERHEBLICHE Verzögerungen auftreten! Die Erfindung gestattet, den Algorithmus z.B. auch so zu gestalten, daß das Schutzsystem auch dann rechtzeitig auslöst, falls das Fahrzeug vorne mehr oder weniger seitlich versetzt - je nach Fahrzeugtyp und Aufprallstelle mit seinen weichsten Karosserieteilen oder auch mit seinen steifesten Karosserieteilen - gegen einen niedrigen Block stößt. Dabei benötigt die Erfindung sogar besonders wenig Hardwareaufwand.

Es werden also in der erfindungsgemäß betriebenen Steuereinheit mehrere ermittelte ISTwerte mit unterschiedlichen physikalisch-mathematischen Dimensionen benutzt.

Der Schwerpunkt der Erfindung liegt in erster Linie gar nicht so sehr darauf, daß sie unterschiedliche Auslöseschwellwerte für unterschiedliche Aufprallrichtungen benutzt. Solche Unterschiede sind allerdings durchaus auch bei den erfindungsgemäßen Algorithmen nützlich und oft beabsichtigt, wie noch gezeigt wird. Statt dessen differenziert die Erfindung vor allem schon hinsichtlich der unterschiedlichen möglichen Verläufe der ISTwerte innerhalb ein und derselben Aufprallrichtung, indem sie den betreffenden ermittelten ISTwerten hierfür fluktuierende Auslöseschwellwerte zuordnet.

Bei der Erfindung kann zwar der Algorithmus ebenfalls eines oder mehrere Ergebnisse der Teilalgorithmen nach Bool'schen Regeln verknüpfen. Bei der Erfindung sind zumindest zwei Auslöseschwellwerte nicht mehr durch einen starren Wert starr festgelegt, sondern durch einen variierbaren Auslöseschwellwert.

Die Erfindung gestattet, eine große Vielzahl von Algorithmen erfindungsgemäß zu nutzten, wie unten detailliert gezeigt wird. Wegen dieser Vielfalt kann der Algorithmus optimal an jenen Bedarf angepaßt werden, der sich aus Crashtests des jeweils betreffenden Fahrzeugtypes ergibt.

Die Erfindung gestattet vor allem, das Schutzsystem auch dann rechtzeitig auszulösen,

* wenn zwar einer oder einzelne ISTwerte noch nicht ganz ihren unmittelbar zugeordneten Richtwert erreichten,

* wenn aber andere ISTwerte den ihnen unmittelbar zugeordneten Richtwert schon längst erreichten und damit schon längst in ihren Auslösewertebereichen angelangt sind.

Vorteilhafte Weiterbildungen gestatten gemäß Anspruch

5, eine fein gestufte Gewichtung der variablen Auslöseschwellwerte zu erreichen, wodurch der Algorithmus auch bei extremen und sich dann trotzdem noch untereinander stark unterscheidenden Crashverhältnissen recht gut angepaßt werden kann,

6, eine sogar kontinuierliche Variation der betreffenden Auslöseschwellwerte auf besonders einfache und rasche Weise zu erreichen, so daß die zum Auslösen nötige Rechenzeit besonders kurz und die bei einem Crash sehr knappe Zeit besonders gut ausgenutzt ist; der Spielraum, um den sich die einzelnen variablen Auslöseschwellwerte verändern können, kann dann beliebig durch eine entsprechende Wahl der Gewichtsfaktoren für jedes Aggregatsglied / für jeden Grenzwert einzeln für sich beliebig festgelegt werden,

7, die Stärke der Variation der einzelnen Auslöseschwellwerte nach Bedarf beliebig festzulegen,

8, eine weitere Untervariante für eine kontinuierliche Veränderung der Auslöseschwellwerte anzuwenden, und

9, im Algorithmus zusätzlich die JA-/NEIN-Kriterien zu berücksichtigen, also z.B. zu berücksichtigen,

* ob Beifahrersitze belegt sind oder nicht, um das speziell für diese Sitze angebrachte Schutzsystem nur dann auszulösen, wenn dort wirklich ein Beifahrer sitzt, oder

* ob der zu schützende Insasse einen Sicherheitsgurt anlegte oder nicht, weil ein Ahgegurteter das Schutzsystem erst bei einem stärkeren Crash benötigt als ein Nichtangegurteter.

Die Erfindung und Weiterbildungen derselben werden anhand der in den Figuren 2 bis 8 gezeigten erfindungsgemäßen Beispiele weiter erläutert, welche der Übersichtlichkeit wegen jeweils möglichst einfach dargestellt wurden. Dabei zeigt die Figur

2 ein Diagramm für die Begrenzung eines Auslösewertebereiches,

3 ein Schaltschema einer erfindungsgemäß betreibbaren Steuereinheit,

4 eine erfindungsgemäß benutzbare Formel zur Berechnung, ob das Schutzsystem ausgelöst werden soll oder nicht,

einen Verlauf des Verzögerungssignales, welcher dem Verlauf der Beschleunigung b / Verzögerung a zumindest angenähert entspricht.

Die Figur 3 zeigt also ein Beispiel für die erfindungsgemäß betreibbare Steuereinheit, die bei einem genügend starken Crash das Schutzsystem auslöst. Diese Steuereinheit enthält mehrere Sensoren S, S1 sowie die Recheneinheit R. Letztere kann ein erfindungsgemäßes Steuersignal B zum Auslösen des Schutzsystemes erzeugen, abhängig von mehreren, den Unfallverlauf beschreibenden ISTwerten, welche ihrerseits von der Recheneinheit R aus den Sensorsignalen ermittelt werden.

Es genügt häufig, einen einzigen Crashsensor zu benutzen, um die Steuerung des gegen Frontal- und Schrägaufprall schützenden Insassenschutzsystemes, z.B. einen entsprechenden Airbag, zu steuern, auch wenn der Winkel der Aufprallrichtung recht unterschiedlich sein kann. Der für die Erfindung nötige Aufwand ist also schon insofern gering. Die Empfindlichkeit dieses Crashsensors kann im wesentlichen nach vorne hin gerichtet sein. Sein Ausgangssignal entspricht der ISTverzögerung des Fahrzeuges, genauer: der Verzögerung des Crashsensors in diesem Fahrzeug. Zur Steuerung eines gegen Seitenaufprall schützenden Insassenschutzsystemes, z.B. eines Seitenairbag, kann an sich aber auch ein zusätzlicher, an den Seitenaufprall angepaßt orientierter Crashsensor benutzt werden. Auch sein Ausgangssignal kann in erfindungsgemäßer Weise mit fluktuierenden Auslöseschwellwerten ausgewertet werden.

Das vom Crashsensor gelieferte Verzögerungssignal kann bei Bedarf - z.B. zur Unterdrückung höherfrequenter Eigenvibrationen des Crashsensors - mittels eines Frequenzfilters zusätzlich geglättet werden und/oder sonstige Korrekturen aufweisen, z.B. um eine bessere Linearisierung der Größe des Verzögerungssignales, bezogen auf den jeweils tatsächlich vorliegenden ISTverzögerungswert, zu erreichen.

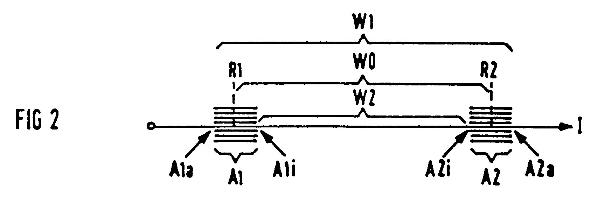

Die Figur 5 zeigt beispielhaft den typischen Verlauf des Verzögerungssignales a eines nach vorne gerichteten Crashsensors bei einem Aufprall eines ca. 50 km/h fahrenden bestimmten Fahrzeugtypes schräg unter 30° auf ein stehendes Hindernis. In der Abszisse ist die Zeit t in msec-Einheiten angegeben, in der Ordinate die Beschleunigung b in g-Einheiten, also als Vielfache der Erdbeschleunigung $g = 10$ m/sec$^2$. Weil bei diesem Unfall vor allem Verzögerungen, also negative Beschleunigungen b auftreten, ist in der Figur 1 an der Ordinate auch die negative Beschleunigung = Verzögerung a angedeutet, wobei dann aber für diese Verzögerung a die an der Ordinate angegebenen Werte erst noch mit -1 zu multiplizieren sind. Nach ca. 45 msec treten extrem starke Verzögerungen a von weit über 10 g auf, wobei erst nach 87 msec die Verzögerung a wieder unter 10 g absinkt. Es sei der Einfachheit wegen angenommen, daß der betreffende Crashsensor korrigierte Verzögerungssignale an die Recheneinheit liefert, daß also die Amplitude der Verzögerungssignale a linear von der wahren Verzögerung a abhängt.

Die zur Auswertung des Verzögerungssignales a benutzte Recheneinheit führt während des Unfalles, z.B. ab dem in der Figur 5 gezeigten - vom Verzögerungssignal a triggerbaren - Startzeitpunkt 1, ständig Integrationen bis zum jeweils momentanen Zeitpunkt tx durch, z.B. um so den jeweiligen IST-Geschwindigkeitsverlust ΔV zu ermitteln.

Zum Integrieren kann auch ein "Akkumulatorregister" benutzt werden, also ein Register, in welchem nicht das digitalisierte IST-Verzögerungssignal a gespeichert wird, sondern in welchem laufend der momentane ISTverzögerungswert a zum bisher dort gespeicherten ISTwert ADDIERT wird.

Zur Berechnung des partiellen IST-Geschwindigkeitsverlustes ΔV benutzt man eine zeitliche einfache Integration des jeweiligen ISTverzögerungssignals a über eine im Vergleich zur Dauer des Crashvorganges kurze Zeitdauer ΔT:

$$\Delta V = \int_{tx-\Delta T}^{tx} a \cdot dt$$

Zur Berechnung dieses partiellen IST-Geschwindigkeitsverlustes ΔV kann man an sich, ähnlich wie in der Schrift DE-C2-41 17 811 beschrieben, auch ein Subtraktionsglied benutzen.

Man kann dazu aber z.B. auch zwei Akkumulatorregister benutzen, wobei im ersten dieser Register wie oben beschrieben die IST-Verzögerungswerte a zur ersten Integration von t1 bis tx laufend addiert, und im zweiten dieser Register, um ΔT verzögert, dieselben IST-Verzögerungswerte a zur Integration von t1 bis (tx-ΔT) addiert werden, wonach schließlich die Differenz der in den beiden Akkumulatorregistern jeweils gespeicherten Werte den partiellen IST-Geschwindigkeitsverlust ΔV darstellt.

Jene Zeitdauer ΔT beträgt je nach Bedarf z.B. 5 msec oder 7 msec, so daß diese Zeitdauer in den fortgeschrittenen Unfallphasen jeweils erst nach dem Startzeitpunkt 1 beginnt und wodurch in diesen späteren Unfallphasen diese kurze Zeitdauer ΔT kürzer ist als die bisherige Dauer (tx-t1) des Unfalls, vgl. die Zeitangaben in der Figur 5.

Die Crashfälle werden nicht - oder nicht nur - hinsichtlich der Aufprallrichtung differenziert behandelt, sondern vor allem (auch) hinsichtlich der unterschiedlichen Verläufe der ISTwerte I innerhalb derselben Aufprallrichtung. Daher werden zumindest zwei der Auslöseschwellwerte jeweils unscharf durch Richtwerte definiert, also ähnlich wie bei der Fuzzy-Logik.

Die Richtwerte dürfen also vom zugeordneten ISTwert jeweils über- und unterschritten werden, ohne sofort für sich Einfluß auf die Auslösung zu haben, weil die Richtwerte nur ungenau den betreffenden Auslöseschwellwert definieren. Wie stark wirklich der betreffende ISTwert jeweils vom zugeordneten Richtwert abweichen kann, bevor jene Grenze erreicht wird, bei der dieser ISTwert endgültig für sich die Auslösung vorbereitet, hängt von dem jeweiligen Verlauf der übrigen IST-werte und von deren Richtwerten ab. Diese Variante der Erfindung gestattet insbesondere, das Schutzsystem auch dann rechtzeitig auszulösen,

* wenn zwar einer oder einzelne ISTwerte noch nicht ganz ihren unmittelbar zugeordneten Richtwert erreichten,
* wenn aber andere ISTwerte den ihnen unmittelbar zugeordneten Richtwert schon längst erreichten und damit schon längst in ihren Auslösewertebereichen angelangt sind.

Der Algorithmus behandelt jeden variablen Auslöseschwellwert z.B. so, daß dieser jeweils für sich

* einen oder mehrere innere Grenzwerte und äußere Grenzwerte aufweist, sowie
* damit innere Auslösewertebereiche definiert, die zwar noch an ihre inneren Grenzwerte, aber nicht mehr an ihre äußeren Grenzwerte angrenzen,
* und äußere Auslösewertebereiche definiert, die nur noch an ihre äußeren Grenzwerte angrenzen, aber die betreffenden inneren Grenzwerte im Inneren enthalten,

wobei der Algorithmus die momentan gültigen Beträge für die betreffenden variablen Auslöseschwellwerte von Fall zu Fall abhängig von dem Betrag des jeweiligen ISTwertes, welcher MITTELBAR zugeordnet ist, festsetzt. Die betreffenden, von Fall zu Fall mehr oder weniger stark variierbaren Auslöseschwellwerte entsprechen dann also jeweils einem Richtwert, von dem der Algorithmus durch Benutzen eines oder mehrerer "Nebenwerte" des Richtwertes abweichen kann.

Bei der Erfindung kann also das Schutzsystem in den genannten Extremfällen, in denen einer oder gleich mehrere der ISTwerte I ungewöhnlich extreme Beträge aufweisen, schneller, also schon früher und damit zu einem optimierten Zeitpunkt ausgelöst werden, im Vergleich zum bekannten Stand der Technik, weil dort abgewartet würde, ob auch noch alle restlichen - fixen - Grenzwerte durch die betreffenden ISTwerte I erreicht werden, so daß bei diesem Stand der Technik der optimale Auslösezeitpunkt schon längst vorbei sein kann.

Der Unterschied zwischen den Auslösewertebereichen und den Auslöseschwell- und Richtwerten dieser Variante der Erfindung einerseits und den Auslösewertebereichen und den Auslöseschwellwerten beim dem Stand der Technik ist besonders durch einen genaueren Vergleich der in den Figuren 1 und 2 gezeigten Beispiele zu erkennen:

Gemäß dem durch die Recheneinheit benutzten Algorithmus müssen - sowohl beim Stand der Technik gemäß der Figur 1, als auch bei der Erfindung gemäß der Figur 2 - zum Auslösen gleichzeitig mehrere verschiedene ISTwerte I in den ihnen zugeordneten Auslösewertebereichen liegen, die beim Stand der Technik jeweils im dort scharf eingegrenzten Auslösewertebereich W und bei der Erfindung in ähnlichen, aber variabel eingegrenzten Auslösewertebereichen W1/W0/W2 liegen. Zumindest zwei Auslösewertebereiche besitzen variable Auslöseschwellwerte, welche für sich "Nebenwerte" A1a, A1i, A2a, A2i von Richtwerten, vgl. R1 und R2, darstellen. Diese Nebenwerte können z.B. die in der Figur 2 angedeuteten Bandbreiten A1a/A1i und A2a/A2i um die jeweiligen Richtwerte R1, R2 umfassen, wobei die erfindungsgemäß definierten Richtwerte R1, R2 offensichtlich jeweils dieselben physikalischen Einheiten besitzen, wie die damit jeweils verglichenen verschiedenen ISTwerte I.

Erfindungsgemäß sind die betreffenden variablen Grenzwerte R1, R2 auch nicht alleine von bloßen JA/NEIN-Kriterien abhängig, also z.B. nicht alleine davon abhängig, ob der Insasse einen Gurt anlegte, - wenngleich solche JA/NEIN-Kriterien auch bei der Erfindung zusätzlich auf die Größe der Richtwerte Einfluß haben mögen. Bei den erfindungsgemäß variablen Auslöseschwellwerten handelt es sich nämlich um Werte, die endlich große Beträge aufweisen, aber deren momentan gültiger Nebenwert von dem momentanen Betrag eines oder mehrerer ISTwerte I - vielleicht zusätzlich auch von JA/NEIN-Kriterien - abhängt.

Demnach weist bei der Erfindung zumindest einer der Teilalgorithmen eine Struktur der ihr zugrunde liegenden Formel auf, durch die mindestens zwei unterschiedliche ISTwerte I so miteinander verknüpft und/oder so miteinander algebraisch verbindet, daß - zumindest de facto - nicht stets ein starrer Auslöseschwellwert die betreffende Grenze des Auslösewertebereiches W festlegt, sondern - beim Vorliegen bestimmter ISTwerte I - variabel angepaßt ein mehr oder weniger abweichender Nebenwert des Richtwertes. Bei der Erfindung kann der letztendlich durch den Algorithmus benutzte Nebenwert z.B. höher oder auch niedriger als der betreffende Richtwert sein.

Man kann die Erfindung auch so auffassen, daß bei ihr zumindest einzelne der variablen Auslöseschwellwerte gegeneinander gewichtet werden, so daß dadurch, daß ein ISTwert I schon tiefer in seinem Auslösewertebereich liegt, der oder die anderen davon betroffenen, mittelbar zugeordneten variablen Auslöseschwellwerte entsprechend ihrer eigenen Gewichtung ihrerseits mehr oder weniger verändert werden.

Die Erfindung gestattet also z.B., das Schutzsystem auch schon dann auszulösen, wenn zwar ein Sensorsignal anzeigt, daß es sich um eine ungewöhnlich starke Verzögerung des Fahrzeuges handelt (extremer ISTwert I1), obwohl z.B. der an sich für die Auslösung üblicherweise sonst vorausgesetzte Mindestwert (Auslöseschwellwert A1) für die ISTgeschwindigkeit des Fahrzeuges (die den ISTwert I2 besitzt) noch unterschritten ist. Das Schutzsystem kann schon früher ausgelöst werden als bei dem bekannten Stand der Technik, weil dort im betreffenden Crashfall abgewartet würde, ob auch noch alle restlichen ISTwerte Ix ihre durch starre Grenzen definierte Auslösewertebereiche Wx erreichen.

Bei der Erfindung hängt der wirklich im einzelnen Crashfall angewendete Betrag solcher variabler Auslöseschwellwerte letztendlich also davon ab, wie stark einer oder mehrere der übrigen Auslöseschwellwerte durch die ihnen zugeordneten übrigen ISTwerte I bereits überschritten oder unterschritten sind, nämlich

*   bei Auslöseschwellwerten, die Werte darstellen, oberhalb denen an sich auszulösen ist, überschritten sind, oder
*   bei Auslöseschwellwerten, die Werte darstellen, unterhalb denen an sich auszulösen ist, unterschritten sind,

und zwar so stark über- oder unterschritten, daß gemäß diesen übrigen Grenzwerten, für sich aus ihrer Sicht, schon längst die Vorbedingungen für die Freigabe der Auslösung erfüllt waren.

Die verschiedenen ISTwerte I besitzen verschiedene physikalische Einheiten. Sie stellen - je nach der angewendeten Regeln für die Auslösung des Schutzsystemes - beispielsweise ISTverzögerungen I mit der Einheit Weg/Zeit$^2$ dar, und/oder ISTgeschwindigkeiten I mit der Einheit Weg/Zeit, und/oder Integrale I der Verzögerungen mit der Einheit Weg/Zeit = Geschwindigkeitsverlust, und/oder Integrale I der Geschwindigkeiten mit den Einheiten Weg = Vorverlagerung, - usw., usw.

Solche ISTwerte I ermittelt die Recheneinheit R aus den Ausgangssignalen des einzigen Sensors S oder der mehreren vorhandenen Sensoren S. Anzumerken ist, daß scheinbar identische physikalische Einheiten von ISTwerten I auch dann als "verschiedene" physikalische Einheiten
- z.B "Geschwindigkeit" = "Weg/Zeit" -
zu betrachten sind, falls der Algorithmus sie auf verschiedenen Wegen ermittelt und sie damit grundverschiedene physikalische Umstände betreffen, z.B. wenn der Algorithmus den einen ISTwert I

-   einmal direkt ermittelt, z.B. die Fahrzeuggeschwindigkeit gemäß der Drehzahl der Tachowelle,
-   und zusätzlich noch andersartig ermittelt, z.B. durch eine Integration, also z.B. aus dem "Integral der bisher ermittelten Verzögerung über der Zeit" = "Geschwindigkeitsverlust seit Crashbeginn",
-   oder durch eine Differentiation mittels des Raddrehzahlsensors ermittelt, z.B. "Differential der Drehzahl der (blockierten oder nicht blockierten) Räder nach der Zeit, multipliziert mit einer Konstanten" = "Geschwindigkeit der Lauffläche des betreffenden Rades".

Zwar können manche ISTwerte I unmittelbar der Recheneinheit R geliefert werden, z.B. durch besondere Sensoren S, vgl. die Figur 3. Aber manche der ISTwerte I kann die Recheneinheit aus den Ausgangssignalen der Sensoren S durch Rechnen ermitteln; sie stellen dann im Sinne dieser Variante der Erfindung verschiedene ISTwerte I mit unterschiedlichen physikalischen Einheiten dar, auch wenn sie alle drei der Einheit "Weg/Zeit" entsprechen.

Bei der Erfindung können sogar jedem ISTwert I erfindungsgemäß variable Grenzwerte zugeordnet sein. Die einzelnen Grenzwerte können sogar beliebig - je nach Bedarf, z.B. auch unterschiedlich von Fahrzeugtyp zu Fahrzeugtyp - in unterschiedlicher Weise variabel sein, also z.B. unterschiedliche Bandbreiten für die zugeordneten Nebenwerte umfassen, z.B. auch für den einen ISTwert I in Sprüngen, für den anderen ISTwert I z.B. aber auch kontinuierlich veränderbar sein.

Die variablen Auslöseschwellwerte A1, A2 können hierbei im Prinzip - je nach dem jeweiligen Bedarf - jeweils mindestens drei unterschiedliche Arten von Auslösewertebereichen begrenzen:

1.  Auslösewertebereiche, welche nur einen unteren Grenzwert A1 aufweisen, so daß oberhalb davon alle zugehörenden ISTwerte I - theoretisch bis zum Wert UNENDLICH - im Auslösebereich liegen; Beispiel: Auslösung nur dann, wenn ein Mindestwert des Integrals der Verzögerungen über der Zeit gegeben oder überschritten ist;
2.  Auslösewertebereiche, welche nur einen oberen Grenzwert A2 aufweisen, so daß unterhalb davon alle zugehörenden ISTwerte I - also theoretisch auch bis zum Wert NULL - im Auslösewertebereich liegen; Beispiel: Auslösung nur dann, wenn eine Höchstverzögerung gegeben oder unterschritten ist;
3.  Auslösewertebereiche, welche sowohl einen unteren Grenzwert A1 als auch einen oberen Grenzwert A2 aufweisen, zwischen denen der Auslösewertebereich liegt; Beispiel: Auslösung nur dann, wenn die Geschwindigkeit zwischen einer Mindest- und einer Höchstgeschwindigkeit liegt.

An sich ist es möglich, für die betreffenden variablen Auslöseschwellwerte, vgl. A1 und A2, für sich jeweils nur zwei starre, also nur zwei diskrete Nebenwerte zuzulassen. So kann der Algorithmus z.B. bei extrem hohen Fahrgeschwindigkeiten auf den einen und bei normalen Fahrgeschwindigkeiten auf den anderen variablen Grenzwert der Minimalverzögerung springen. Dann handelt es sich um eine relativ grobe Gewichtung der ISTwerte "Fahrgeschwindigkeit" und "Minimalverzögerung", obwohl diese Art von Variation der betreffenden Grenzwerte schon einen Fortschritt darstellt.

Man kann diese Sprünge zu Nebenwerten eines ersten Richtwertes, der einem ersten ISTwert I zugeordnet ist, auf einfache Weise z.B. dadurch erreichen, daß man zuerst jenen anderen, zweiten ISTwert I, von dem das Springen des ersten Richtwertes mittelbar abhängen soll, unmittelbar mit jenem dem zweiten ISTwert zugeordneten Richtwert vergleicht, der seinerseits ebenfalls mindestens zwei verschiedene Nebenwerte aufweist. Je nachdem ob dieses Vergleichsergebnis ergibt, daß der zweite ISTwert sehr viel größer, gleich oder deutlich kleiner als seine Nebenwerte ist, kann man daraus jeweils ein zugeordnetes Kriterium als logische EINS oder NULL ermitteln als Befehl dafür, ob beim ersten Richtwert auf einen anderen seiner Nebenwerte zu springen ist oder nicht. Dementsprechend steuert der Algorithmus die Recheneinheit dann so, daß sie dem ersten ISTwert nur den betreffenden Nebenwert zuordnet.

In entsprechender Weise sind noch feiner gestufte Gewichtungen der variablen Auslöseschwellwerte erreichbar, um, damit eine noch bessere Anpassung an unterschiedlich stark Extremfälle zu erreichen. So kann der Algorithmus erfindungsgemäß so gestaltet werden, daß er zumindest einzelne der variablen Auslöseschwellwerte, vgl. die Figur 2, so behandelt, daß diese jeweils in sich mindestens drei - z.B. fünf, zehn oder unendlich viele - Nebenwerte besitzen können, nämlich jeweils einem zentralen Richtwert R1, R2, sowie darüber und darunter je Nebenwerte. Der zentrale Richtwert R1 und/oder R2 begrenzt dann einen zentralen Auslösewertebereich W0. Der Algorithmus kann dann - je nach der Extremheit der betreffenden ersten und zweiten ISTwerte und damit je nach Art des Crashes - jeweils auch einen oder mehrere darüber und darunter liegende Nebenwerte solcher Richtwerte benutzen. Wenn einem einzelnen Richtwert mindestens drei Nebenwerte zugeordnet werden, dann legt der Algorithmus den in einem speziellen Crashfall momentan jeweils gültigen Betrag des Auslöseschwellwertes z.B. in der Weise fest, daß die Recheneinheit das Steuersignal B auch dann schon auslöst,

* wenn alle ISTwerte I ihre momentan gültigen Auslöseschwellwerte soeben etwas überschritten und damit bereits ihre Auslösewertebereiche erreichten,

wobei aber die Recheneinheit das Steuersignal B in diesem dritten Falle noch nicht auslöst,

* wenn auch nur einer dieser ISTwerte I noch nicht seinem momentan gültigen Auslöseschwellwert überschritt und damit noch nicht seinen Auslösewertebereich erreichte.

Man kann der zweiten Variante der Erfindung z.B. die in der Figur 4 gezeigte Formel zugrunde legen. Sie hat, allgemein formuliert, folgende Struktur:

$$[\Sigma(Kx * Ix/Rx)] / \Sigma(Kx) \geq 1$$

Kx ist jeweils ein Gewichtungsfaktor (der teilweise auch für sich einen negativen Wert besitzen kann), Ix ein ISTwert und Rx der diesem ISTwert Ix unmittelbar zugeordnete Richtwert.

Wenn das Ergebnis der linken Seite dieser Gleichung kleiner als EINS ist, dann löst die Steuereinheit das Schutzsystem (noch) nicht aus. Sobald dieses Ergebnis aber gleich EINS ist oder größer als EINS (geworden) ist, dann löst die Steuereinheit das Schutzsystem aus.

Diese Formel stellt mathematisch einen Bruch dar. Sein Zähler stellt ein Aggregat aus den gewichteten (Kx) relativen ISTwerten (Ix/Rx) dar. In dieser Formel stellen also alle ISTwerte Ix jeweils relative ISTwerte, nämlich Quotienten eines ISTwertes Ix über dem zugeordneten zentralen Grenzwert Rx dar, die mit dem Gewichtsfaktor Kx multipliziert sind.

Diese Formel stellt, allgemein und anders formuliert, eine mathematisch lineare Funktion hinsichtlich aller ISTwerte Ix dar. Sie ist ein Aggregat, das mindestens zwei - im vorliegenden Fall n verschiedenen - Aggregatsgliedern

$$Kx * (Ix/Rx)$$

entsprechend den im gezeigten Beispiel n verschiedenen ISTwerten Ix enthält.

Wenn die Gewichtsfaktoren Kx teils positiv, teils negativ sind, dann wird das Aggregatsergebnis durch algebraisches Addieren und Subtrahieren der einzelnen Aggragatsglieder gebildet.

Eine Besonderheit der Schreibweise für diese Formel besteht darin, daß nicht ein einziger Auslöseschwellwert A explizit auf der rechten Seite der Formel angegeben ist, sondern nur die Bedingung "≧1". Falls die linke Seite der Formel diese Bedingung erfüllt, löst die Recheneinheit das Schutzsystem aus. Diese Formel enthält also statt eines explizit angegebenen momentanen Auslöseschwellwertes A nur explizit die Richtwerte Rx, sowie implizit wegen der Bedingung "≧1" die momentan gültigen Nebenwerte dieser Richtwerte Rx. Diese Schreibweise der Formel ist günstig, weil sie eben nicht einen einzigen Auslöseschwellwert mit einem einzigen zugeordneten ISTwert zu vergleichen hat. Die Recheneinheit rechnet bevorzugt auch gemäß dieser Formel, um zu prüfen ob bei den jeweils gegebenen ISTwerten Ix bereits auszulösen ist oder noch nicht auszulösen ist.

Die Ix stellen also z.B. folgende Werte dar, welche im - oder bis zum - betreffenden Augenblick ermittelt wurden: ISTwerte der Geschwindigkeit, der Verzögerung, des Integrals der Verzögerung über die Zeit (= Geschwindigkeitsverlust) und des Integrals des Geschwindigkeitsverlustes über die Zeit (= angenähert die Vorverlagerung s des Fahrzeuginsassen).

Die Kx stellen also die verschiedenen Gewichte der einzelnen Algorithmusglieder / Aggregatsglieder innerhalb des Aggregats dar, - also Relativwerte für die Bedeutung des betreffenden ISTwertes Ix und dessen Richtwertes Rx, verglichen mit der Bedeutung der übrigen ISTwerte Ix und deren Richtwerte Rx. Wenn der Gewichtsfaktor Kx in einem Aggregatsglied groß (klein) ist gegen die Gewichtsfaktoren Kx der anderen Aggregatsglieder, dann hat nämlich der unmittelbar zugeordnete ISTwert Ix einen besonders großen (kleinen) Einfluß darauf, ob das Ergebnis der Formel kleiner oder größer als EINS ist. Falls alle diese Gewichtsfaktoren Kx für sich jeweils gleich EINS sind, haben alle Aggregatsglieder Ix/Rx im Vergleich zueinander gleich große Gewichte. Welche Gewichte man ihnen aber zuordnet, hängt von der jeweiligen Strategie ab, welche man der Auslösung für den jeweils betreffenden Fahrzeugtyp zugrunde legt. Z.B. kann man dem Aggregatsglied, das dem Integral der Geschwindigkeitsverluste entspricht, eine besonders hohe Priorität zuordnen, also diesem Glied ein besonders großes Kx zuordnen. Andererseits kann man z.B. einem Aggregatsglied, das der IST-Fahrgeschwindigkeit entspricht, vielleicht eine relativ kleine Priorität und damit einen relativ kleinen Kx-Wert zuordnen.

Die im Nenner angegebene Summe stellt die Summe aller Gewichtsfaktoren Kx dar, so daß das Aggregat gleich EINS ist, falls im Mittel (!) alle betrachteten ISTwerte Ix ihrem Grenzwert Rx ähnlich nahe kommen - manche sind bei der Auslösung schon etwas darüber, manche noch etwas darunter. Sobald übrigens alle ISTwerte Ix exakt gleich groß wie die ihnen zugeordneten Grenzwerte Rx sind, dann wird ebenfalls ausgelöst, weil soeben alle ISTwerte Ix ihren Richtwert Rx erreichten. Der Nenner des Bruches stellt die Summe der Gewichtsfaktoren Kx nur deswegen dar, damit die im Zähler angegebenen Richtwerte Rx trotz der Gewichtsfaktoren Kx wirklich die echten Beträge der ausgewählten Richtwerte Rx darstellen.

Diese Formel behandelt alle Richtwerte Rx als KONTINUIERLICH variable Auslöseschwellwerte, wobei sogar alle anderen (!) ISTwerte I1 ... I(x-1), I(x+1) ... In - jeder für sich -. de facto den jeweils momentan gültigen Nebenwertsbetrag des dem ISTwert Ix unmittelbar zugeordneten Richtwertes Rx in MITTELBARER Weise MITBESTIMMEN. Bei dieser Formel werden nämlich die betreffenden Richtwerte, die in der Figur 4 mit Rx und in der Figur 2 beispielhaft mit R1 und R2 bezeichnet werden, nicht in Sprüngen variiert, was man leicht in der Formel durch Einsetzen von konkreten Beträgen für die einzelnen Parameter feststellen kann. Das Aggregat ist nämlich so gestaltet, daß einer oder mehrere variable Grenzwerte Rx schon recht deutlich längst erreicht sein müssen, damit - de facto - andere solche variablen Grenzwerte Rx deutlich durch den Algorithmus variiert werden. Es gibt hier also auch keine singulären Nebenwerte dieser Richtwerte. Wegen dieser extremen Feingestuftheit der Nebenwerte kann eine Steuereinheit, deren Algorithmus derartige kontinuierlich variable Auslöseschwellwerte benutzt, besonders leicht rechtzeitig das Schutzsystem auslösen.

Der Spielraum, um den sich die einzelnen variablen Grenzwerte Rx verändern können, kann dabei beliebig durch eine entsprechende Wahl der Gewichtsfaktoren Kx für jedes Aggregatsglied und damit für jeden einzelnen Richtwert / Grenzwert Rx beliebig festgelegt werden, vgl. die Figur 2. Je nach dem Wert des zugeordneten Kx können die Nebenwerte der Richtwerte Rx also de facto mehr oder weniger breiten Bändern mit unscharfen Rändern entsprechen. Dadurch gestattet diese Weiterbildung der Erfindung eine besonders gute Anpassung des Algorithmusses an die unterschiedlichsten extremen Crashfälle.

Diese Formel ist übrigens besonders einfach, indem sie nur algebraische Funktionen erfordert, nämlich Divisionen bzw. Multiplikationen und Additionen, evtl. auch Subtraktionen. Sie gestattet daher der Recheneinheit R, auf besonders einfache und besonders rasche Weise mittels des entsprechenden (Teil-)Algorithmusses festzustellen, ob das Schutzsystem auszulösen ist oder nicht. Die bei einem Crash sehr knappen Zeit ist dann besonders gut ausgenutzt. Selbst in Extremfällen kann die Recheneinheit R trotz der als variabel behandelten Grenzwerte Rx rasch und damit noch rechtzeitig das Rechenergebnis ermitteln.

Die Erfindung gestattet aber, dem Algorithmus / den Teilalgorithmen in vielfältiger Weise auch anders strukturierte Formeln zugrunde zu legen und trotzdem kontinuierliche Variationen der Grenzwerte / Richtwerte Rx zu erreichen:

Z.B. können einzelne der Quotienten Ix/Rx in der in Figur 4 gezeigten Formel auch durch den quadratischen ISTwert $(Ix/Rx)^2$ oder sogar durch noch viel stärker potenzierte Werte von $(Ix/Rx)$ ersetzt werden. Dann steigt die Bedeutung dieser Aggregatsglieder innerhalb des Aggregates umso stärker, je stärker der relative ISTwert Ix/Rx den Wert EINS übersteigt und je größer dessen Potenz ist. Dies ist bei manchen Fahrzeugtypen vorteilhaft.

Auch kann, statt der in Figur 4 gezeigten, ein Aggregat enthaltenden Formel, z.B. das - alle n relativen ISTwerte Ix enthaltende - Produkt

$$(I1/R1) * (I2/R2) * .... * (In-1/Rn-1) * (In/Rn) \geq 1$$

benutzt werden, wobei auch dann die Auslösebedingung beispielhaft davon abhängig gemacht wird, ob im Crashfalle dieses Produkt gleich oder größer EINS wurde. Auch dann behandelt der Algorithmus die Auslöseschwellwerte Rx als variable Richtwerte.

Es sind auch Mischformen zwischen der in der Figur 4 dargestellten Formel und der soeben dargestellten Produktformel möglich. Z.B. können zwar ebenfalls ähnliche Produkte - z.B. wieder von mehreren, aber mit nur einem Teil der n relativen ISTwerte Ix/Rx - gebildet werden, wobei dann diese Produkte einzelne der relativen ISTwerte Ix/Rx in den in der Figur 4 gezeigten Aggregatsgliedern ersetzen. Dann enthalten also die einzelnen, in der Figur 4 gezeigten Aggregatsglieder die Produkte mehrerer relativer ISTwerte $(Ix/Rx)*(Iy/Ry)$, evtl. noch multipliziert mit Kx. Die verschiedenen Aggregatsglieder in der so variierten Formel werden schließlich entsprechend der Figur 4 noch addiert und/oder subtrahiert und als Auslösekriterium benutzt. Dann ist dieses Produkt jeweils weniger komplex, und nur wenige ISTwerte Ix beeinflussen gegenseitig multiplikativ ihre Richtwerte Rx.

Der Algorithmus kann zusätzlich - in für sich bekannter Weise - JA/NEIN-Kriterien, die nicht aus analogen bzw. endlichen Beträgen von ISTwerten gewonnen werden, berücksichtigen, um Auslöseschwellwerte, vgl. R1 R2 und Rx, in Sprüngen statt kontinuierlich zu verändern. Dazu können zusätzlich einer oder mehrere Sensoren, vgl. S1 in der Figur 3, ein oder mehrere JA/NEIN-Kriterien an die Recheneinheit R liefern, z.B. um in für sich bekannter Weise unterschiedliche Grenzwerte zu benutzen, z.B. abhängig davon,

*   ob Beifahrersitze belegt sind oder nicht, um das speziell für diese Sitze angebrachte Schutzsystem nur dann auszulösen, wenn dort wirklich ein Beifahrer sitzt, oder
*   ob der zu schützende Insasse einen Sicherheitsgurt anlegte oder nicht, weil ein Angegurteter das Schutzsystem erst bei einem stärkeren Crash benötigt als ein Nichtangegurteter.

**Patentansprüche**

1.  Verfahren zur Steuerung der Steuereinheit eines Fahrzeuginsassen-Schutzsystemes, um bei einem genügend starken Unfall das Schutzsystem auszulösen,

    wobei

    -   die Steuereinheit einen oder mehrere, bei dem Unfall Sensorsignale (a) liefernde Sensoren (S) enthält,
    -   die Steuereinheit eine Recheneinheit (R) enthält, die aus den Sensorsignalen mindestens zwei ISTwerte (I) mit verschiedenen physikalischen Einheiten (z.B. Weg/Zeit$^2$, Weg/Zeit) ermittelt, diese auswertet und das Schutzsystem nur dann auslöst, wenn die ISTwerte (I) innerhalb von Auslösewertebereichen (W bzw. W1/W0/W2) liegen,
    -   mindestens zwei unterschiedlichen ISTwerten (I1, I2) je ein Auslöseschwellwert (A1, A2) als variabler Richtwert (A1a/R1/A1i, A2a/R1/A2i) zugeordnet ist, wobei der Richtwert (z.B. R1) jeweils mittelbar auch zumindest einem weiteren ISTwert (I2) mit anderer physikalischer Dimension zugeordnet ist, wobei der weitere ISTwert (I2) seinerseits unmittelbar einem anderen Richtwert (R2) zugeordnet ist,
    -   der Algorithmus den aktuell gültigen Betrag des Auslöseschwellwertes (R1, R2, A1a, A1i, A2a, A2i) jeweils anhand der mittelbar zugeordneten ISTwerte und anhand des unmittelbar zugeordneten ISTwertes festsetzt.

2.  Verfahren nach Patentanspruch 1, mit einem bei einem Unfall ein Verzögerungssignal (a) liefernden Crashsensor (S),
    **dadurch gekennzeichnet,**

    -   daß die Recheneinheit (R) während des Unfalles ab einem Startzeitpunkt (1) zur Ermittlung des ISTwertes / von ISTwerten jeweils zumindest eine Integration, nämlich eine zeitliche Integration des Verzögerungssignals (a), durchführt,
    -   und daß die Recheneinheit einen mit Hilfe der Integration ermittelten ISTwert (ΔV) mit dem festgesetzten momentanen Auslöseschwellwert vergleicht.

3.  Verfahren nach Patentanspruch 1 oder 2,
    **dadurch gekenzeichnet,**

    -   daß die Recheneinheit eine zeitliche Integration (ΔV) des Verzögerungssignals (a) über eine im Vergleich zur Dauer des Verzögerungssignales kurze Zeitdauer (ΔT) durchführt, wodurch beim Unfall als ermittelter aktueller Wert laufend angenähert ein auf diese kurze Zeitdauer bezogener aktueller partieller Geschwindigkeitsverlust (ΔV) ermittelt wird.

4.  Verfahren nach einem der vorhergehenden Patentansprüche,
    **dadurch gekennzeichnet,**

    -   daß die Recheneinheit als Integration eine zeitliche Integration (ΔV) des Verzögerungssignals (a) über die gesamte bisherige, ab dem Startzeitpunkt (1) eingetretene Dauer (tx-t1) durchführt, wodurch beim Unfall laufend angenähert ein seit dem Startzeitpunkt eingetretener gesamter aktueller Geschwindigkeitsverlust (ΔV) ermittelt wird.

5.  Verfahren nach Patentanspruch 1,
    **dadurch gekennzeichnet,**

    -   daß der Algorithmus, zumindest einer seiner Teilalgorithmen, zumindest einzelne der variablen Auslöseschwellwerte (A1, A2) so behandelt, daß diese jeweils in sich mindestens drei Werten entsprechen können, nämlich jeweils einem zentralen Richtwert (R1, R2), der einen zentralen Auslösewertebereich (W0) abgrenzt, und darüber und darunter jeweils mindestens einem weiteren, inneren und einen weiteren, äußeren Auslöseschwellwert (A1a, A1i, A2a, A2i), wodurch, diese variablen Auslöseschwellwerte (A1, A2) jeweils drei Arten von Auslösewertebereichen (W0, W1, W2) definieren, nämlich

\* einen inneren Auslösewertebereich (W2), der nicht mehr den zentralen Richtwert (R1, R2) umfaßt,

\* einen zentralen Auslösewertebereich (W0), der an den betreffenden zentralen Richtwert (R1, R2) angrenzt, umfaßt, und

\* einen äußeren Auslösewertebereich (W1), in dessen Inneren der zentrale Richtwert (R1, R2) liegt.

6. Verfahren nach Patentanspruch 5,
   **dadurch gekennzeichnet,**

   - der Algorithmus, oder zumindest einer seiner Teilalgorithmen, mathematisch einem linearen Aggregat von ISTwert-abhängigen Aggregatsgliedern (Fig. 4) entspricht, wobei zumindest zwei der Aggregatsglieder ($Kx^*Ix/Rx$) jeweils Vergleiche (Quotienten) des ISTwertes (Ix) mit dem unmittelbar zugeordneten zentralen Richtwert (Rx) umfassen.

7. Verfahren nach Patentanspruch 6,
   **dadurch gekennzeichnet,**

   - daß zumindest eines der Aggregatsglieder einen Gewichtsfaktor (Kx) enthält, der die Stärke der Variation des betreffenden Auslöseschwellwertes festlegt.

8. Verfahren nach einem der vorhergehenden Patentansprüche,
   **dadurch gekennzeichnet,**

   - der Algorithmus Produkte unterschiedlicher ISTwerte (relativer ISTwerte Ix/Rx) enthält.

9. Verfahren nach einem der vorhergehenden Patentansprüche,
   **dadurch gekennzeichnet,**

   - daß zusätzlich ein oder mehrere Sensoren (S1) JA-/NEIN-Kriterien an die Recheneinheit liefern, und
   - der Algorithmus zusätzlich diese JA-/NEIN-Kriterien verarbeitet.

10. Schaltungsanordnung mit einer Recheneinheit, die bei einem genügend starken Crash ein Schutzsystem für Insassen eines Fahrzeuges auslöst,
    z.B. für ein Airbagsystem,
    zur Durchführung des Verfahrens nach einem der vorhergehenden Patentansprüche.

FIG 1

W

A1                    A2

FIG 3

S

S1

R

B

FIG 4

$$\frac{K_1 \cdot \frac{I_1}{R_1} + K_2 \cdot \frac{I_2}{R_2} + \dots + K_{n-1} \cdot \frac{I_{n-1}}{R_{n-1}} + K_n \cdot \frac{I_n}{R_n}}{\sum_{m=1}^{n} K_m} \geq 1$$

FIG 5

b

10
0
-10
-20
-30
-40
(a)

a

1

2       3

0  10  20  30  40  50  60  70  80  90  100  t
                                        ms

FIG 2